# EUROPEAN PATENT APPLICATION

(11) **EP 2 381 288 A1**
(43) Date of publication of application: **26.10.2011**
(21) Application number: 10382088.2
(22) Date of filing: 20.04.2010
(51) Int. Cl.: G02B 23/12, B64D 39/06, H04N 5/33, G02B 27/01, G02B 5/28

(54) **System for night vision from distant observation places**

(71) Applicant: EADS Construcciones Aeronauticas, S.A., 28022 Madrid (ES)
(72) Inventor: ADARVE LOZANO, Alberto, 28906, Getafe, madrid (ES)
(74) Representative: Elzaburu Marquez, Alberto

(57) **Abstract**

System for providing an enhanced night vision of an scenario (13) from at least a first and a second observation places (11, 15), such as in the case of the scenario of an in-flight refuelling operation where the first observation place (11) is the tanker aircraft and the second observation place (15) is the receptor aircraft comprising: Laser based infrared illumination means (21) of the scenario (13); Vision means (23) located in said first observation place (11) comprising at least one camera suitable to be used with said Laser based infrared illumination means (21); NVIS means (31) including a filter (33) eliminating the laser infrared light emitted by said illumination means (21) allowing human observers an enhanced vision of said scenario (13) from said second observation place (15).

## Description

### FIELD OF THE INVENTION

The present invention relates to a system for providing night vision of an scenario from at least two observation places and in particular to a system for providing night vision of the refuelling scenario in aerial refuelling operations between a tanker and a receiver aircraft from both the tanker and the receiver aircraft.

### BACKGROUND

There are well known in the art artificial illuminating means for night vision systems. One of them uses IR (Infrared Light) due to the evident advantages that non visible light provides at certain critical situations. To achieve this purpose, different types of illuminators have been proposed inside this IR band, from incandescent bulbs filtered with IR pass filters, LED (Light Emitting Diode) based illuminators and recently Laser based ones.

There are also known in the art night vision means using cameras to provide images to some monitors placed in an observation place of a target scenario illuminated with infrared light.

There is also known in the art as the so-called NVIS (Night Vision Imaging System) device. This device uses image intensifier tubes to produce an enhanced image of the scenario in very low light conditions. It amplifies and translates to a visual range the environmental light, mainly the infrared one, allowing a better visibility that highly enhances the night vision.

All those night vision means are mainly intended to provide an enhanced night vision of an scenario from a single observation place or to provide an enhanced night vision of an scenario from many observation places using the same vision means in each observation place.

However there is a need of night vision systems allowing an enhanced vision of an scenario from more than one observation places such as in the case of the night vision of the refuelling scenario in aerial refuelling operations between a tanker and a receiver aircraft where there is a first observation place in the tanker and a second observation place in the receiver aircraft and where the respective vision needs from each observation place can not be satisfied with the known night vision means.

This invention is intended to the attention of this demand.

### SUMMARY OF THE INVENTION

One object of the present invention is a system allowing an enhanced night vision of an scenario from at least two observation places using different vision means from each observation place.

Another object of the present invention is a system allowing an enhanced night vision of the refuelling scenario in aerial refuelling operations between a tanker and a receiver aircraft both from the tanker aircraft and the receiver aircraft.

These and other objects are met by a system for providing an enhanced night vision of an scenario from at least a first and a second observation places, comprising:
- Laser based infrared illumination means of the scenario, preferably located in said first observation place.
- Vision means located in said first observation place comprising at least one camera suitable to be used with said Laser based infrared illumination means.
- NVIS means including a filter eliminating the laser infrared light emitted by said illumination means allowing human observers an enhanced vision of said scenario from said second observation place.

In a preferred embodiment, the nominal wavelength of the light emitted by said illumination means is comprised in the range 770 - 812 nm. Hereby it is achieved a system using suitable illumination means for artificial vision means, such as cameras.

In another preferred embodiment, the light to be eliminated by said filter is the light comprised in a bandwidth in a range of 8 to 12 nm around the nominal wavelength of the light emitted by said illumination means. Hereby it is achieved a system using a suitable filter to be coupled to commercial NVIS devices.

In another preferred embodiment, said first observation place is a tanker aircraft, said scenario is the refuelling area of a refuelling operation and said second place is the receptor aircraft. Hereby it is achieved a system providing an enhanced night vision in a refuelling operation both to a tanker operator using artificial vision means comprising cameras and to the receiver pilot using NVIS goggles.

Other features and advantages of the present invention will be understood from the following detailed description in relation with the enclosed drawings.

### BRIEF DESCRIPTION OF DRAWINGS

Figure 1 is a schematic view of a refuelling operation between a tanker aircraft and a receiver aircraft using hose/drogue means.
Figure 2 is a schematic perspective view of a NVIS device for providing enhanced night vision of an scenario illuminated with Laser Infrared Light, according to the present invention.
Figure 3 is a graph showing the response of a NVIS device of type C (STD-3009) to light at different wavelengths.
Figure 4 is a graph showing the spectral emission of a LIRL illumination means and Figure 5 is a graph showing the response of the corresponding NVIS device filter according to the present invention.
Figure 6 is a graph showing the response of a NVIS device of type C incorporating a filter according to the present invention.

### DETAILED DESCRIPTION OF PREFERRED EMBODIMENTS

A description of a preferred embodiment of a system according to the present invention for providing night vision of the refuelling scenario in aerial refuelling operations between a tanker and a receiver aircraft from both the tanker and the receiver aircraft follows.

For in-flight refuelling operations, one usual method is based on the use of a boom device for interconnecting a tanker aircraft with a receiver aircraft or receptor in flight, which is basically a telescopic or extensible tube attached to the under side of the tanker aircraft by means of an articulation element, that provides fuel passage from the tanker aircraft to the receiver aircraft. At the tanker aircraft, the operator controls visually all steps and procedures for a safe refuelling operation. From the tanker, the operator controls the boom movements and therefore manipulates the boom until it makes a physical connection with the receptacle of the approaching receptor aircraft.

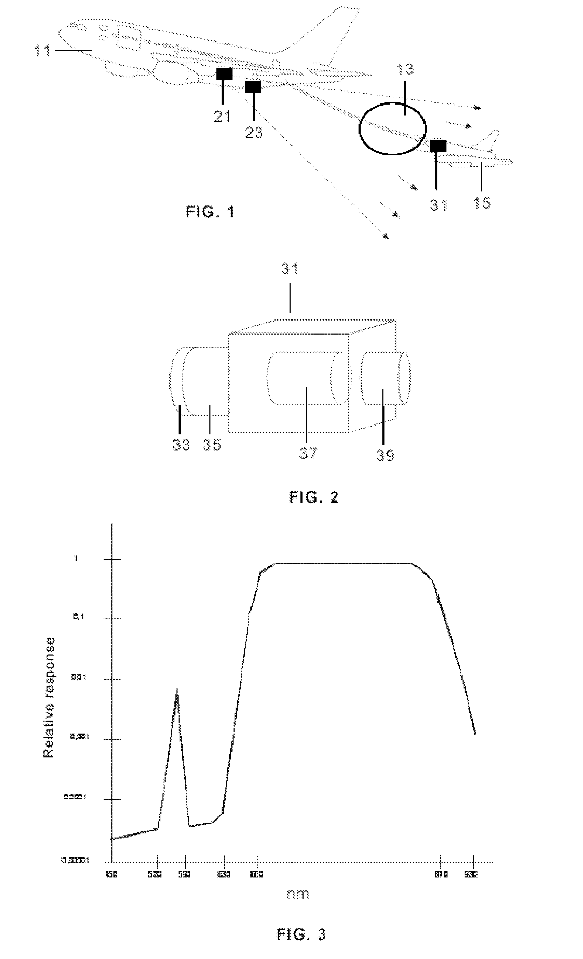

Another usual method for in-flight refuelling operations (illustrated in Fig. 1) is called probe and drogue. As the name implies, this refuelling method employs a flexible hose that trails from the tanker aircraft. The drogue is a fitting resembling a windsock or shuttlecock, attached at its narrow end with a valve to the flexible hose. The drogue stabilizes the hose in flight and provides a funnel to aid insertion of the receiver aircraft probe into the hose. The hose connects to a drum unit and, when not in use, the hose/drogue is reeled completely into the cited drum unit in the tanker aircraft. The receiver has a probe, which is a rigid arm placed on the aircraft's nose or fuselage. This probe is often retracted when not in use, particularly on high speed aircraft. At the end of the probe is a valve that is closed until it mates with the drogue, after which it opens and allows fuel to pass from tanker to receiver. A so-called "broken probe" (actually a broken fuel valve, as described above) may happen if poor flying technique is used by the receiver pilot, or in turbulence.

At the low infrared wavelengths, tanker operators can supervise the refuelling operation using cameras that provide images to some monitors placed in tanker cabin. Due to a number of technical and economical reasons, sensors used in these cameras have a good sensitivity only at certain regions of the spectrum including the NIR (Near Infrared Region) and so they are suitable to be used with IR illumination.

On another side, receptor pilots usually can use a NVIS device and in particular NVIS goggles during the refuelling operation.

But if the IR illumination is a LIRL (Laser based Infrared Light) illumination, when seen through a NVIS device produce a undesirable glare and blooming effect that, at the best case, highly disturbs the receptor pilot vision of the refuelling scenario and that, at the worst case, completely disables all viewing capacities for the NVIS device user. This is due to the fact that the spectrum response of a NVIS device at the laser infrared wavelengths is at its maximum level and therefore the NVIS device must lower its gain to the minimum avoiding consequently the visibility of the rest of the image.

So there is, on one side, LIRL illumination means illuminating the refuelling scenario at a certain band of the spectrum imposed by the sensor sensitivity of the vision system cameras at the tanker aircraft and, on the other side, useless NVIS goggles for the receptor pilot because their spectral response is also maximum at the same band of the spectrum avoiding the visibility of the refuelling scenario at those illuminating conditions.

As illustrated in Fig. 1 the vision system according to the invention comprises:
- Laser based infrared illumination means 21 of the refuelling scenario 13 located in the tanker aircraft 11.
- Vision means 23 located in the tanker aircraft 11 comprising at least one camera suitable to be used with said Laser based infrared illumination means 21.
- NVIS goggles 31 including a filter eliminating the laser infrared light emitted by said illumination means 21 allowing the receptor pilots the vision of the refuelling scenario 13.

As shown in Figure 2 the NVIS goggles 31, comprising a first group of lenses 35 to focus external photons into the intensifier tube 37 that translates image to the visual range to be finally focused into the user eye thanks to a second group of lenses 39, include a filter 33 coupled to the first group of lenses 35.

The system according to this invention makes compatible the use of Laser Infrared Light for illuminating the refuelling scenario 13, needed for the vision means 23 in the tanker aircraft 11 in order to satisfy the vision requirements for performing a good supervision of the refuelling operation by the tanker operator, and the use of NVIS goggles 31 that allow an enhanced vision of the refuelling scenario 13 by the receptor pilot.

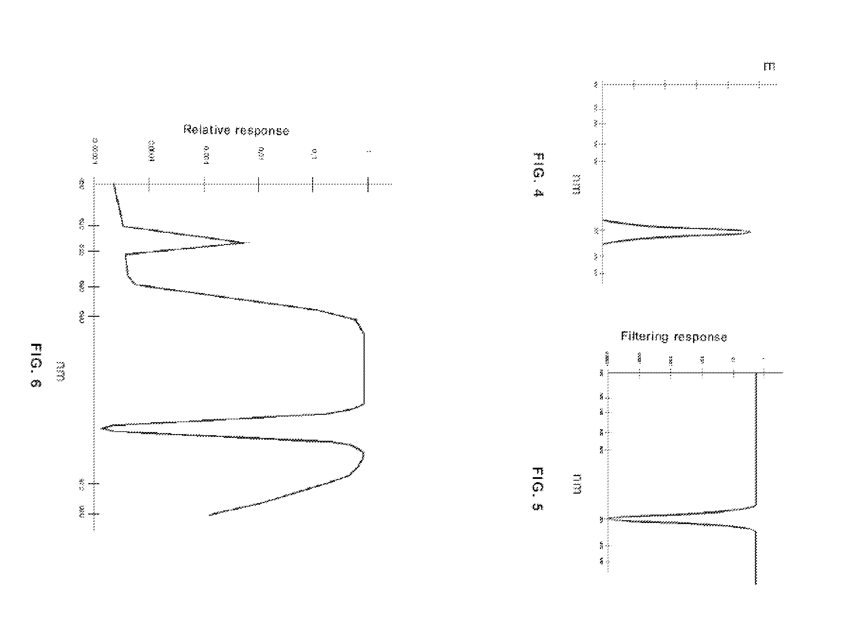

Until now, the fact that infrared illumination could be more o less uniformly distributed along the IR band where camera sensors still have sensitivity, made pointless the use of an optical filter to eliminate it, as this filter would also eliminate the rest of the infrared light that the intensifier tube 37 of a NVIS device 31 uses for night vision. If this IR light was eliminated the image would have had a high level of degradation due to the lack of light. But by using LIRL illumination means 21 that have an spectral emission as shown in Figure 4 and thanks to its temporal coherence (the central wavelength can vary depending on the type of laser used but the shape is maintained), it is possible to use a very narrow optical filter 33 to eliminate most of their emission at the time that no significant effect is achieved at the NVIS performance thanks to the photons effect at the rest of the spectrum. This way, we can make both elements (light and NVIS goggles 31) compatible with the use of cameras 23 with sensors where sensitivity at IR wavelengths is used.

The key element of the invention is therefore the use of a special optical filter 33 to eliminate or highly attenuate the light emissions from the LIRL illumination means 21. This can be done using very narrow band suppressing filters and it is based in the temporal coherent properties of the LIRL illuminating means 21.

The LIRL illuminating means 21 have a temperature dependence that makes them change their wavelength emission depending on it. This can be compensated selecting the width and central frequency of the used filter 33. If, as a sake of example, we have a LIRL illuminating means 21 emitting at a nominal wavelength of 803 nm at 25°C with a temperature drift of about 0,3nm/°C and a temperature range upper limit of 35°C, a deviation of up to 3 nm can be achieved. To all this, we have to add tolerances at the laser and at the used filters. Filtering shape considerations should also be considered, as no top hat shape transmission can be achieved. In Figures 4 and 5 it can be seen a typical ongoing of a LIRL illuminating means 23 and the opposite answer that shall be obtained in filter 33 to compensate its effects.

Figure 3 shows the response of a third generation NVIS device to input light illustrating the incompatibility of this device with low infrared light. The response shows a particular behaviour to the green that was not present in previous NVIS generations. Apart from this, the maximum gain was presented to low infrared spectrum avoiding the normal use of high intensity lights at this band.

Figure 5 shows the response of a NIVS device 31 incorporating a filter 33 according to this invention. It can be seen that the NVIS device behaviour is modified to have the desired answer thanks to the use of filter 33 that may be obtained by reflection techniques of by absorption at the lens material. At the end, the glare or blooming effects will be eliminated at the time that intermodulation harmonics will help the user to see at the rest of the band spectrum.

In a preferred embodiments it is considered that the nominal wavelength of LIRL illuminating means 21 is comprised in the range of 770 - 812 nm and the bandwidth of the filter 33 is comprised in the range of 8-12 nm.

As the skilled man will readily understand the present invention is applicable to environments where an scenario similar to the refuelling area 13 shall be observed at night from a first and a second observation places similar to the tanker aircraft and the receiver aircraft 11, 15, being the scenario illuminated by LIDR light and being used in said first and second observation places similar vision means to the vision means 23 located in the tanker aircraft for supervising the refuelling operation and the NVIS 31 means used by the receptor aircraft pilot during the refuelling operation.

Although the present invention has been fully described in connection with preferred embodiments, it is evident that modifications may be introduced within the scope thereof, not considering this as limited by these embodiments, but by the contents of the following claims.

## Claims

1. System for providing an enhanced night vision of an scenario (13) from at least a first and a second observation places (11, 15), the system comprising:
- Laser based infrared illumination means (21) of the scenario (13);
- Vision means (23) located in said first observation place (11) comprising at least one camera suitable to be used with said Laser based infrared illumination means (21);
- NVIS means (31) including a filter (33) eliminating the laser infrared light emitted by said illumination means (21) allowing human observers an enhanced vision of said scenario (13) from said second observation place (15).

2. System according to claim 1, wherein said illumination means (21) are located in said first observation place (11).

3. System according to any of claims 1-2, wherein the nominal wavelength of the light emitted by said illumination means (21) is comprised in the range 770-812 nm.

4. System according to any of claims 1-3, wherein the light to be eliminated by said filter (33) is the light comprised in a bandwidth in a range of 8 - 12 nm around the nominal wavelength of the light emitted by said illumination means(21).

5. System according to any of claims 1-4, wherein said NVIS means (31) are NVIS goggles.

6. System according to any of claims 1-5, wherein said first observation place (11) is a tanker aircraft, said scenario (13) is the refuelling area of a refuelling operation and said second place (15) is the receptor aircraft.

7. System according to claim 6, wherein said NVIS means (31) are used by the pilot of the receptor aircraft.

8. System according to any of claims 6-7, wherein said refuelling operation is performed using hose/drogue means.

9. System according to any of claims 6-7, wherein said refuelling operation is performed using a boom device.
